# EUROPÄISCHE PATENTSCHRIFT

(11) **EP 3 161 441 B1**
(45) Veröffentlichungstag und Bekanntmachung des Hinweises auf die Patenterteilung: **24.10.2018**
(21) Anmeldenummer: 15723879.1
(22) Anmeldetag: 08.05.2015
(51) Int. Cl.: G01L 9/00, G01L 13/02, G01L 19/00, G01L 19/14

(54) **DRUCKSENSOR ZUR ERFASSUNG EINES DRUCKS EINES FLUIDEN MEDIUMS IN EINEM MESSRAUM**
PRESSURE SENSOR FOR DETECTING A PRESSURE OF A LIQUID MEDIUM IN A MEASURING CHAMBER
CAPTEUR DE PRESSION POUR ENREGISTRER LA PRESSION D'UN MILIEU FLUIDE DANS UNE CHAMBRE DE MESURE

(30) Priorität: 26.06.2014 DE 102014212259
(43) Veröffentlichungstag der Anmeldung: 03.05.2017
(73) Patentinhaber: Robert Bosch GmbH, 70442 Stuttgart (DE)
(72) Erfinder: MOELKNER, Thomas, 70563 Stuttgart (DE); EIFLER, Georg, 71332 Waiblingen (DE); STOLL, Oliver, 73230 Kirchheim-Teck (DE); PATZNER, Patrik, 71229 Leonberg-Silberberg (DE)
(86) Internationale Anmeldenummer: PCT/EP2015/060252
(87) Internationale Veröffentlichungsnummer: WO 2015/197254

(56) Entgegenhaltungen:
- EP-A2- 0 354 479
- JP-A- 2012 215 580
- US-A1- 2005 103 110

## Beschreibung

### Stand der Technik

Aus dem Stand der Technik sind verschiedene Vorrichtungen und Verfahren zum Erfassen von Drücken von fluiden Medien, wie beispielsweise Gasen und Flüssigkeiten, bekannt. Die Messgröße Druck ist eine in Gasen und Flüssigkeiten auftretende, allseits wirkende, nicht gerichtete Kraftwirkung. Zur Messung der Drücke gibt es dynamisch und statisch wirkende Messwertaufnehmer bzw. Sensoren. Dynamisch wirkende Drucksensoren, dienen nur zur Messung von Druckschwingungen in gasförmigen oder flüssigen Medien. Die Druckmessung kann beispielsweise direkt, über Membranverformung oder durch einen Kraftsensor erfolgen. Insbesondere zur Messung sehr hoher Drücke wäre es grundsätzlich möglich, einen elektrischen Widerstand dem Medium auszusetzen, denn viele bekannte elektrische Widerstände zeigen eine Druckabhängigkeit. Dabei gestalten sich jedoch die Unterdrückung der gleichzeitigen Abhängigkeit der Widerstände von der Temperatur und die druckdichte Durchführung der elektrischen Anschlüsse aus dem Druckmedium heraus als schwierig.

Eine weit verbreitete Methode der Druckerfassung verwendet daher zur Signalgewinnung zunächst eine dünne Membran als mechanische Zwischenstufe, die einseitig dem Druck ausgesetzt ist und sich unter dessen Einfluss durchbiegt. Sie kann in weiten Grenzen nach Dicke und Durchmesser dem jeweiligen Druckbereich angepasst werden. Niedrige Druckmessbereiche führen zu vergleichsweise großen Membranen mit Durchbiegungen, die im Bereich von 0,1 mm bis 1 mm liegen können. Hohe Drücke erfordern jedoch dickere Membranen geringen Durchmessers, die sich meist nur wenige Mikrometer durchbiegen. Derartige Drucksensoren sind beispielsweise in Konrad Reif (Hrsg.): Sensoren im Kraftfahrzeug, 1. Auflage 2010, Seiten 80-82 und Seiten 134-136 beschrieben.

Um die Drucksensoren in oder an dem Messraum anzubringen, weisen diese üblicherweise einen Druckanschluss auf. Der Druckanschluss kann beispielsweise als Gewindestutzen ausgeführt sein und in eine Wand eines Messraums eingeschraubt werden. Der eigentliche Messwertaufnehmer bzw. das eigentliche Sensorelement ist entweder direkt oder indirekt über einen Zwischenträger an einem Gehäusesockel angeordnet. Der Gehäusesockel ist entweder integral bzw. einstückig mit dem Druckanschluss ausgebildet, wie es beispielsweise in der DE 10 2009 054 689 A1 offenbart ist, oder der Gehäusesockel und der Druckanschluss sind separate Bauteile, die mittels einer Schweißung dauerhaft miteinander verbunden werden, wie es beispielsweise in der EP 1 518 098 B1 offenbart ist.

Das Sensorgehäuse derartiger Drucksensoren wird üblicherweise durch Schweißen, Bördeln oder Kombinationen dieser Prozesse verschlossen. Um den Innenraum und die darin enthaltene Elektronik zu schützen, werden die Gehäuseteile durch Klebungen oder Dichtringe abgedichtet.

Trotz der zahlreichen Vorteile der aus dem Stand der Technik bekannten Drucksensoren beinhalten diese noch Verbesserungspotenzial. So erzeugen beispielsweise Drucksensoren mit einer Membran und Dünnschicht-DMS-Streifen ein geringes Spannungssignal, was die Signalaufbereitung aufwändig und den Sensor bezüglich der elektromotorischen Verträglichkeit anfällig macht. Insbesondere bei Hochdrucksensoren mit Siliziummembran gestaltet sich dabei die Verbindung der Siliziummembran mit dem Druckanschluss und die Durchführung der elektrischen Kontakte vom Hochdruckmedienraum zum Elektronikraum schwierig.

Aus der EP 0 354 479 A2 ist ein Drucksensor zur Erfassung eines Drucks eines fluiden Mediums in einem Messraum bekannt, der ein Sensorgehäuse mit einem Elektronikraum, mindestens ein Sensorelement, das so in oder an dem Sensorgehäuse angeordnet ist, dass es zum Messen eines Drucks des Mediums dem Medium aussetzbar ist, und einen Druckanschluss, mittels dessen der Drucksensor an oder in dem Messraum anbringbar ist, umfasst. Der Druckanschluss weist einen Zufuhrkanal zum Zuführen des fluiden Mediums zu dem Sensorelement auf, wobei das Sensorelement einen Messabschnitt mit Messelementen zur Erfassung des Drucks, der in dem Zufuhrkanal angeordnet ist, und einen Kontaktierungsabschnitt mit Kontaktelementen zum elektrischen Kontaktieren der Messelemente, der in dem Elektronikraum angeordnet ist, aufweist. Der Drucksensor weist zwischen dem Elektronikraum und dem Druckanschluss eine Öffnung auf, wobei das Sensorelement so angeordnet ist, dass der Kontaktierungsabschnitt die Öffnung durchragt und der Messabschnitt die Öffnung abdichtend umgibt. Die Messelemente sind auf einer Oberseite des Messabschnitts angeordnet, wobei eine Unterseite des Messabschnitts eine Kaverne aufweist, wobei die Kaverne so ausgebildet ist, dass die Messelemente mit dem Druck des fluiden Mediums beaufschlagbar sind. Auf der Oberseite ist ein erstes Abdeckungselement angeordnet ist, das die Messelemente abdeckt, und auf der Unterseite ist ein zweites Abdeckungselement angeordnet.

Aus der US 2005/0103110 A1 ist ein Sensor zur Messung von Druck und Temperatur eines Mediums bekannt, bei dem ein Substrat in einer Öffnung angeordnet ist, wobei ein zentraler Abschnitt des Substrats eine Hochdruckseite gegenüber einer Niederdruckseite des Sensors abdichtet.

Aus der JP 2012 215580 A ist ein Drucksensor bekannt, bei dem ein mit Messelementen versehenes Substrat in eine Öffnung des Sensorgehäuses eingeglast ist.

### Offenbarung der Erfindung

Es wird daher ein Drucksensor vorgeschlagen, welcher die Nachteile bekannter Drucksensoren zumindest weitgehend vermeidet und eine dichte Verbindung zwischen dem Sensorelement und dem Elektronikraum bei gleichzeitig ausreichend hohem Spannungssignal erlaubt. Die Erfindung ist grundsätzlich zum Erfassen eines Drucks an jedem Einsatzort geeignet, insbesondere im Bereich der in einem Kraftfahrzeug zu messenden Drücke, insbesondere der Hochdrücke, wie sie beispielsweise in einem "Common-Rail" vorherrschen.

Der erfindungsgemäße Drucksensor dient der Erfassung eines Drucks eines fluiden Mediums in einem Messraum. Der Druck kann grundsätzlich als Absolutdruck erfasst werden. Daneben können bei entsprechender Integration jeweiliger Bauteile ein oder mehrere physikalische und/oder chemische Eigenschaften des fluiden Mediums bestimmt werden, einschließlich beispielsweise einer Temperatur, eines weiteren Drucks, einer Strömungseigenschaft oder einer oder mehrerer anderer Eigenschaften. Bei dem Messraum kann es sich grundsätzlich um einen beliebigen Raum handeln, in welchem das fluide Medium, also ein Gas und/oder eine Flüssigkeit, ruhend oder strömend aufgenommen ist. insbesondere kann es sich bei dem Messraum um einen Teil eines Kraftstoffsystems handeln. Der Drucksensor kann somit insbesondere zur Erfassung eines Kraftstoffdrucks eingesetzt werden oder ausgestaltet sein. Der erfindungsgemäße Drucksensor zur Erfassung eines Drucks eines fluiden Mediums in einem Messraum umfasst ein Sensorgehäuse mit einem Elektronikraum, mindestens ein Sensorelement, das so in oder an dem Sensorgehäuse angeordnet ist, dass es zum Messen eines Drucks des Mediums dem Medium aussetzbar ist, und einen Druckanschluss, mittels dessen der Drucksensor an oder in dem Messraum anbringbar ist. Der Druckanschluss weist einen Zufuhrkanal zum Zuführen des fluiden Mediums zu dem Sensorelement auf. Das Sensorelement weist einen Messabschnitt mit Messelementen zur Erfassung des Drucks, der in dem Zufuhrkanal angeordnet ist, und einen Kontaktierungsabschnitt mit Kontaktelementen zum elektrischen Kontaktieren der Messelemente, der in dem Elektronikraum angeordnet ist, auf.

Der Drucksensor weist zwischen dem Elektronikraum und dem Druckanschluss eine Öffnung auf. Das Sensorelement ist so angeordnet, dass der Kontaktierungsabschnitt die Öffnung durchragt und der Messabschnitt die Öffnung abdichtend umgibt. Der Drucksensor weist einen Gehäusesockel auf, auf dem das Sensorgehäuse angeordnet ist, wobei die Öffnung in dem Gehäusesockel ausgebildet ist. Der Messabschnitt des Sensorelements ist mit einem die Öffnung begrenzenden Rand verklebt. Die Messelemente sind auf einer Oberseite des Messabschnitts angeordnet. Auf der Oberseite ist ein erstes Abdeckungselement angeordnet, das die Messelemente abdeckt. Eine Unterseite des Messabschnitts weist eine Kaverne auf. Die Kaverne ist so ausgebildet, dass die Messelemente mit dem Druck des fluiden Mediums beaufschlagbar sind. Auf der Unterseite ist ein zweites Abdeckungselement angeordnet, das die Kaverne abdeckt. Auf einer dem Gehäusesockel zugewandten Seite des Messabschnitts und des ersten Abdeckelements und des zweiten Abdeckelementes ist ein Klebstoff aufgebracht, wobei durch den Klebstoff der Messabschnitt des Sensorelements mit einem die Öffnung begrenzenden Rand verklebt ist.

Das zweite Abdeckungselement kann eine Öffnung zum Erlauben eines Zutritts des fluiden Mediums zu der Kaverne aufweisen. Das erste Abdeckungselement und/oder das zweite Abdeckungselement kann eine Glasplatte sein. Das erste Abdeckungselement kann dabei mittels eines Abstandshalters zur Oberseite angeordnet sein, so dass ein Referenzraum ausgebildet wird. In dem Referenzraum kann ein Referenzvakuum oder ein Referenzdruck vorliegen. Der Messabschnitt kann breiter sein als der Kontaktierungsabschnitt. Unter einer Breite ist im Rahmen der vorliegenden Erfindung eine Abmessung senkrecht zu einer die Oberseite und Unterseite verbindenden Richtung angesehen. Wird das Sensorelement entsprechend von unten durch eine Öffnung in den Gehäusesockel oder den Druckanschluss gesteckt, dann liegt das Sensorelement mit dem breiteren Messabschnitt an dem Rand der Öffnung auf. Dabei befindet sich der Messabschnitt in dem zu messenden fluiden Medium, während der Kontaktabschnitt mit den Kontaktelementen in den Elektronikraum des Sensorgehäuses ragt und dort mit der Auswertelektronik verbunden werden kann. Eine Klebung kann die Spalte der Durchführung so füllen, dass bei angelegtem Druck der Sensor auf die Klebung gepresst wird und sich dabei selbst abdichtet.

Unter einem Druckstutzen ist im Rahmen der vorliegenden Erfindung ein Ansatz- oder Rohrstück mit mindestens einer Bohrung zu verstehen, durch welche das fluide Medium zu dem Sensorelement geleitet werden kann, beispielsweise eine zylindrische Bohrung in einem zylindrischen Stutzen. Der Druckstutzen kann als druckbeständiger Stutzen ausgebildet sein, um beispielsweise bei den in einer Kraftstoffleitung auftretenden Hochdrücken nicht beschädigt zu werden. Entsprechend kann der Druckstutzen auch als Druckanschluss bezeichnet werden. Die zylindrische Bohrung kann dabei insbesondere als Zufuhrkanal ausgebildet sein, um das zu messende fluide Medium zu dem Sensorelement zu leiten.

Ein Grundgedanke der vorliegenden Erfindung ist die Kombination der Vorteile einer Siliziummembran mit hohem Spannungssignal mit einer selbstdichtenden Durchführung der elektrischen Kontakte. Die hohe Spannungssignalausbeute vereinfacht die Signalaufbereitung und macht den Sensor unempfindlicher gegenüber elektromagnetischer Verträglichkeit. Außerdem kann dieselbe Membran auf verschiedene Druckbereiche abgeglichen werden. Das selbstdichtende Konzept zur Durchführung der elektrischen Kontakte vereinfacht den Aufbau entscheidend. Auch bei Membranbruch besteht keine Gefahr von auslaufendem Kraftstoff in den Elektronikraum. Das Sensorelement kann insbesondere ein Siliziumsensorelement sein. Auf der Vorderseite bzw. Oberseite befinden sich die piezoresistiven Widerstände, die Metallisierung und die Kontaktpads. Von der Rückseite bzw. Unterseite ist die Vertiefung für die Membran eingeätzt. Auf die Oberseite des Sensorelements wird mit etwas Abstand zur Membran eine Platte aus Glas, Silizium oder einem anderen Material aufgebracht, die die Membran schützt und das Referenzvakuum, bzw. den Referenzdruck einschließt. Auf der Rückseite wird ebenfalls eine Platte befestigt, allerdings mit einem Loch, damit das zu messende fluide Medium auf die Rückseite der Membran wirken kann.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Querschnittsansicht eines erfindungsgemäßen Drucksensors,
- Figur 2: eine Vorderansicht eines Sensorelements des Drucksensors,
- Figur 3: eine Querschnittsansicht des Sensorelements des Drucksensors,
- Figur 4: eine Vorderansicht des Sensorelements,
- Figur 5: eine Rückansicht des Sensorelements,
- Figur 6: eine perspektivische Ansicht des Sensorelements,
- Figur 7: eine Explosionsdarstellung eines Teils des Drucksensors und
- Figur 8: einen Drucksensor gemäß einem Beispiel.

### Ausführungsformen der Erfindung

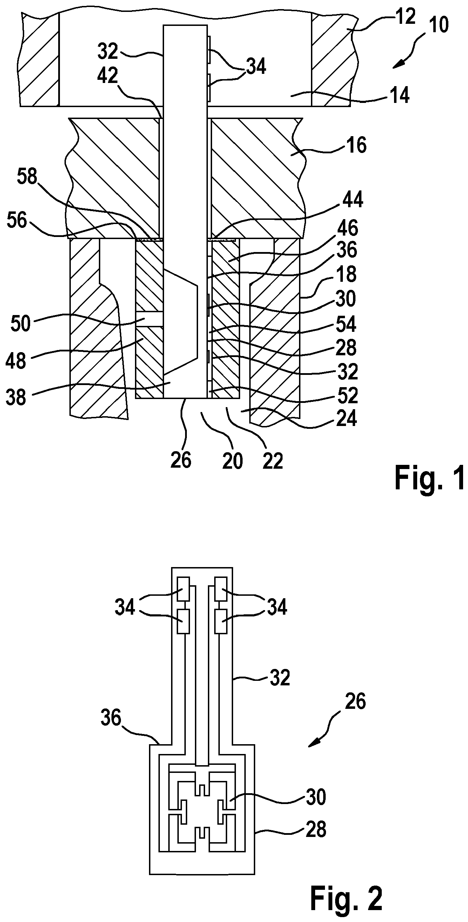

Figur 1 zeigt eine Querschnittsansicht eines Drucksensors 10 gemäß einer ersten Ausführungsform der vorliegenden Erfindung. Der Drucksensor 10 kann beispielsweise zum Erfassen eines Drucks von Kraftstoff in einer Kraftstoffleitung eines Verbrennungsmotors ausgebildet sein. Der Drucksensor 10 weist ein Sensorgehäuse 12 mit einem Elektronikraum 14 auf. Das Sensorgehäuse 12 ist auf einem Gehäusesockel 16 angeordnet. Der Drucksensor 10 weist weiter einen Druckanschluss 18 auf. Der Druckanschluss 18 kann aus Metall hergestellt sein und kann als zylindrischer Druckstutzen, insbesondere als Gewindestutzen, ausgebildet sein. Der Druckanschluss 18 weist an einem an dem Sensorgehäuse 12 abgewandten Ende 20 eine Öffnung 22 für das zu messende druckbeaufschlagte Medium auf, das sich in einem nicht näher gezeigten Messraum, wie beispielsweise einer Kraftstoffleitung befindet. Bei einer Ausführung des Druckanschlusses 18 als Gewindestutzen kann dieser ein nicht gezeigtes Außengewinde aufweisen, das dazu dient, den Druckanschluss 18 an oder in einer Wand des Messraums zu befestigen, wobei das Außengewinde in ein passend geformtes Innengewinde der Wand des Messraums greift. Der Druckanschluss 18 weist einen sich an die Öffnung 22 anschließenden Zufuhrkanal 24 auf.

Der Drucksensor 10 weist weiter ein Sensorelement 26 auf. Das Sensorelement 26 ist so in oder an dem Sensorgehäuse 12 angeordnet, dass es zum Messen eines Drucks des Mediums dem Medium aussetzbar ist, wie nachstehend ausführlicher beschrieben wird.

Figur 2 zeigt eine Vorderansicht des Sensorelements 26. Das Sensorelement 26 weist einen Messabschnitt 28 mit Messelementen 30 zur Erfassung des Drucks auf. Die Messelemente 30 sind beispielsweise piezoresistive Widerstandselemente. Das Sensorelement 26 weist weiter einen Kontaktierungsabschnitt 32 mit Kontaktelementen 34 zur elektrischen Kontaktierung der Messelemente 30 auf. Die Messelemente 30 sind auf einer Oberseite 36 des Sensorelements 26 angeordnet. Ebenso sind die Kontaktelemente 34 auf der Oberseite 36 angeordnet. Der Messabschnitt 28 ist breiter als der Kontaktierungsabschnitt 32. Somit ist zwischen dem Messabschnitt 28 und dem Kontaktierungsabschnitt 32 eine Stufe gebildet.

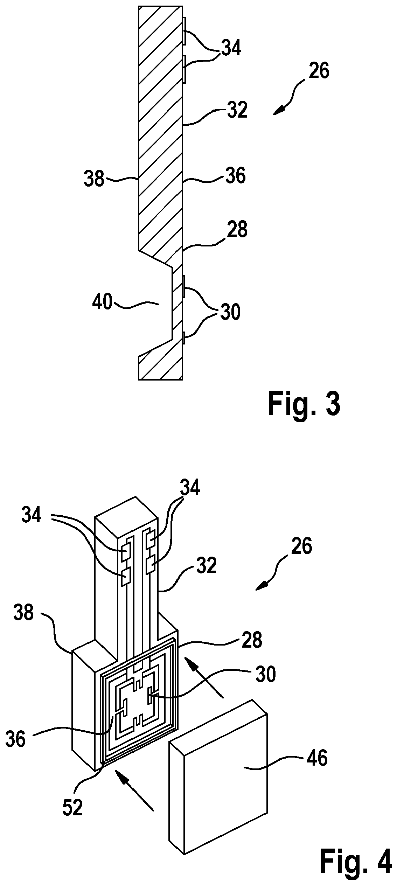

Figur 3 zeigt eine Querschnittsansicht des Sensorelements 26. Auf einer Unterseite 38 des Sensorelements 26 und genauer des Messabschnitts 28, die der Oberseite 36 gegenüber liegt, ist eine Kaverne 40 ausgebildet. Die Kaverne 40 ist beispielsweise von der Unterseite 38 aus in das Sensorelement 26 geätzt.

Wie in Figur 1 gezeigt, ist in einem montierten Zustand das Sensorelement 26 so angeordnet, dass der Messabschnitt 28 in dem Zufuhrkanal 24 angeordnet ist und der Kontaktierungsabschnitt 32 in dem Elektronikraum 14 angeordnet ist. Aus diesem Grund weist, wie in Figur 1 gezeigt, der Drucksensor 10 eine Öffnung 42 auf. Die Öffnung 42 befindet sich zwischen dem Elektronikraum 14 und dem Druckanschluss 16. Dabei ist das Sensorelement 26 so angeordnet, dass der Kontaktierungsabschnitt 32 die Öffnung 42 durchragt und der Messabschnitt 28 die Öffnung 42 abdichtend umgibt. Die Öffnung 22 ist dabei in dem Gehäusesockel 16 ausgebildet. Der Messabschnitt 28 ist mit einem die Öffnung 42 begrenzenden Rand 44 der Gehäusesockels 16 verklebt.

Wie aus Figur 1 weiter zu erkennen ist, ist auf der Oberseite 36 ein erstes Abdeckungselement 46 angeordnet, das den Messabschnitt 28 und somit die Messelemente 30 abdeckt. Auf der Unterseite 38 ist ein zweites Abdeckungselement 48 angeordnet, das die Kaverne 40 abdeckt. Das zweite Abdeckungselement 48 weist dabei eine Öffnung 50 zum Erlauben eines Zutritts des fluiden Mediums zu der Kaverne 40 auf. Das erste Abdeckungselement 46 und/oder das zweite Abdeckungselement 48 können Glasplatten sein. Dabei kann das erste Abdeckungselement 46 von der Oberseite 36 beabstandet sein. Beispielsweise ist zwischen der Oberseite 36 und dem ersten Abdeckungselement 46 ein Abstandshalter 52 angeordnet, so dass zwischen der Oberseite 36 und dem ersten Abdeckungselement 46 ein Referenzraum 54 gebildet ist. Nachstehend wird eine mögliche Montage des Drucksensors 10 beschrieben.

Figur 4 zeigt eine perspektivische Vorderansicht des Sensorelements 26. Das Sensorelement 26 wird in der oben beschriebenen Form hergestellt. Dann wird der Messabschnitt 28 mit den Messelementen 30 und der Kontaktierungsabschnitt 32 mit den Kontaktelementen 34 ausgebildet. Beispielsweise werden die Messelemente 30 und die Kontaktelemente 34 auf das Sensorelement 26 aufgedampft. Schließlich wird der Abstandshalter 52 und das erste Abdeckungselement 46 so auf dass Sensorelement 26 aufgebracht, dass es die Messelemente 30 abdeckt, beispielsweise geklebt.

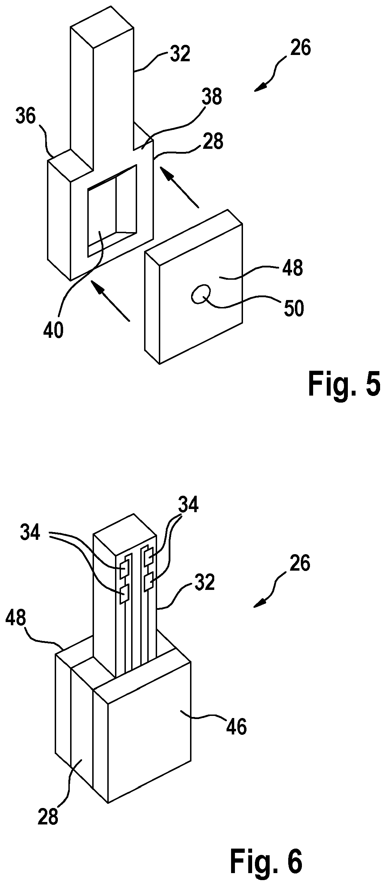

Figur 5 zeigt eine perspektivische Rückansicht des Sensorelements 26. In die Unterseite 38 wird die Kaverne 40 eingebracht, beispielsweise geätzt. Dann wird das zweite Abdeckungselement 48 mit der Öffnung 50 so auf dass Sensorelement 26 aufgebracht, dass es die Kaverne 40 abdeckt, beispielsweise geklebt.

Figur 6 zeigt eine perspektivische Ansicht des Sensorelements 26. Zu erkennen ist der Verbund aus dem Sensorelement 26 und den darauf aufgebrachten Abdeckelementen 46, 48. Des Weiteren ist zu erkennen, dass der Kontaktierungsabschnitt 32 nicht abgedeckt ist, sondern freiliegt, so dass die Kontaktelemente 34 zugänglich sind.

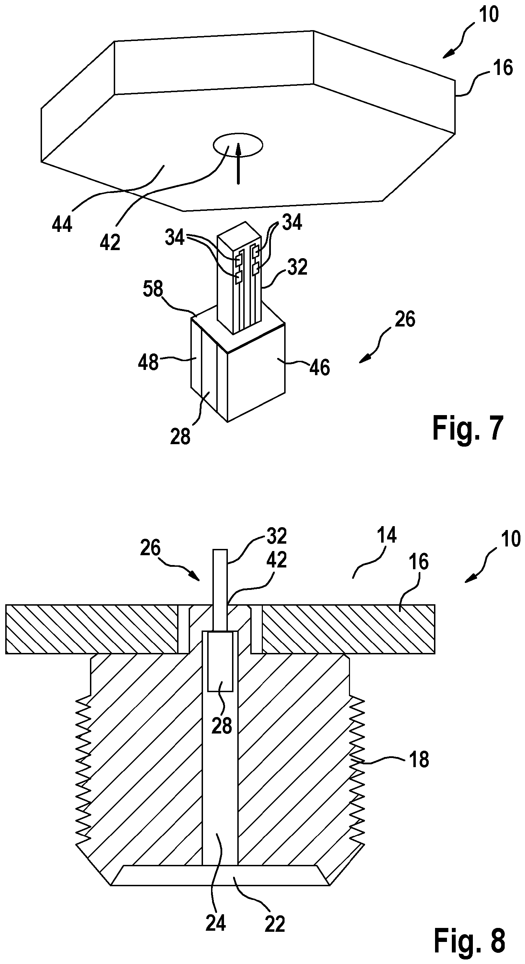

Figur 7 zeigt eine Explosionsdarstellung eines Teils des Drucksensors 10. Dargestellt sind der Gehäusesockel 16 und das Sensorelement 26 mit den darauf aufgebrachten Abdeckelementen 46, 48. Auf einer dem Gehäusesockel 16 zugewandten Seite 56 des Messabschnitts 28 und der Abdeckelemente 46, 48 wird Klebstoff 58 aufgebracht. Das Sensorelement 26 wird so an dem Gehäusesockel 16 angebracht, dass der Kontaktierungsabschnitt 32 durch die Öffnung 42 in dem Gehäusesockel 16 hindurchgeführt wird. Durch das Vorsehen des Klebstoffs 58 wird das Sensorelement 26 mit dem die Öffnung 42 begrenzenden Rand 44 verklebt. Der Klebstoff 58 kann dabei auch in die Öffnung 42 eingebracht werden, so dass der Kontaktierungsabschnitt 32 in der Öffnung 42 mit dem Gehäusesockel 16 verklebt wird. Bei angelegtem Druck, der von dem fluiden Medium in dem Zufuhrkanal 24 auf das Sensorelement 26 wirkt, wird das Sensorelement 26 auf die Klebung gepresst und dichtet dabei den Elektronikraum 14 gegenüber dem fluiden Medium ab. Das fluide Medium kann jedoch durch die Öffnung 50 in dem zweiten Abdeckelement 48 in die Kaverne 40 gelangen und so von der Rückseite her die Messelemente 30 mit Druckbeaufschlagen.

Figur 8 zeigt eine Querschnittsansicht eines Drucksensors 10 gemäß einem Beispiel. Nachstehend werden lediglich die Unterschiede zu der vorhergehenden Ausführungsform beschrieben und gleiche Bauteile sind mit gleichen Bezugszeichen versehen. Bei dem Drucksensor 10 des Beispiels weist anstelle des Gehäusesockels 16 der Druckanschluss 18 die Öffnung 42 auf, durch die der Kontaktierungsabschnitt 32 des Sensorelements 26 in der oben beschriebenen Weise hindurch geführt ist. Entsprechend befindet sich auch hier der Messabschnitt 28 in dem Zufuhrkanal 24 und der Kontaktierungsabschnitt 32 in dem Elektronikraum 14.

## Patentansprüche

1. Drucksensor (10) zur Erfassung eines Drucks eines fluiden Mediums in einem Messraum, umfassend ein Sensorgehäuse (12) mit einem Elektronikraum (14), mindestens ein Sensorelement (26), das so in oder an dem Sensorgehäuse (12) angeordnet ist, dass es zum Messen eines Drucks des Mediums dem Medium aussetzbar ist, und einen Druckanschluss (18), mittels dessen der Drucksensor (10) an oder in dem Messraum anbringbar ist, wobei der Druckanschluss (18) einen Zufuhrkanal (24) zum Zuführen des fluiden Mediums zu dem Sensorelement (26) aufweist, wobei das Sensorelement (26) einen Messabschnitt (28) mit Messelementen (30) zur Erfassung des Drucks, der in dem Zufuhrkanal (24) angeordnet ist, und einen Kontaktierungsabschnitt (32) mit Kontaktelementen (34) zum elektrischen Kontaktieren der Messelemente (30), der in dem Elektronikraum (14) angeordnet ist, aufweist, wobei der Drucksensor (10) zwischen dem Elektronikraum (14) und dem Druckanschluss (18) eine Öffnung (42) aufweist, wobei das Sensorelement (26) so angeordnet ist, dass der Kontaktierungsabschnitt (32) die Öffnung (42) durchragt und der Messabschnitt (28) die Öffnung (42) abdichtend umgibt, wobei die Messelemente (30) auf einer Oberseite (36) des Messabschnitts (28) angeordnet sind, wobei eine Unterseite (38) des Messabschnitts (28) eine Kaverne (40) aufweist, wobei die Kaverne (40) so ausgebildet ist, dass die Messelemente (30) mit dem Druck des fluiden Mediums beaufschlagbar sind, wobei auf der Oberseite (36) ein erstes Abdeckungselement (46) angeordnet ist, das die Messelemente (30) abdeckt, wobei auf der Unterseite (38) ein zweites Abdeckungselement (48) angeordnet ist,
**dadurch gekennzeichnet, dass**
das zweite Abdeckungselement (48) die Kaverne (40) abdeckt, dass der Drucksensor (10) einen Gehäusesockel (16) aufweist, auf dem das Sensorgehäuse (12) angeordnet ist, wobei die Öffnung (42) in dem Gehäusesockel (16) ausgebildet ist, und dass auf einer dem Gehäusesockel (16) zugewandten Seite (56) des Messabschnitts (28) und des ersten Abdeckelements (46) und des zweiten Abdeckelementes (48) ein Klebstoff (58) aufgebracht ist, wobei durch den Klebstoff (58) der Messabschnitt (28) des Sensorelements (26) mit einem die Öffnung (42) begrenzenden Rand (44) verklebt ist.

2. Drucksensor (10) nach Anspruch 1, wobei das zweite Abdeckungselement (48) eine Öffnung (50) zum Erlauben eines Zutritts des fluiden Mediums zu der Kaverne (40) aufweist.

3. Drucksensor (10) nach Anspruch 1, wobei das erste Abdeckungselement (46) und/oder das zweite Abdeckungselement (48) eine Glasplatte ist.

## Claims

1. Pressure sensor (10) for capturing a pressure of a fluid medium in a measurement space, comprising a sensor housing (12) with an electronics space (14), at least one sensor element (26) which is arranged in or on the sensor housing (12) in such a manner that it can be exposed to the medium in order to measure a pressure of the medium, and a pressure connection (18) which can be used to fit the pressure sensor (10) to or in the measurement space, wherein the pressure connection (18) has a supply channel (24) for supplying the fluid medium to the sensor element (26), wherein the sensor element (26) has a measuring section (28) with measuring elements (30) for capturing the pressure, which measuring section is arranged in the supply channel (24), and a contact-making section (32) with contact elements (34) for making electrical contact with the measuring elements (30), which contact-making section is arranged in the electronics space (14), wherein the pressure sensor (10) has an opening (42) between the electronics space (14) and the pressure connection (18), wherein the sensor element (26) is arranged in such a manner that the contact-making section (32) projects through the opening (42) and the measuring section (28) surrounds the opening (42) in a sealing manner, wherein the measuring elements (30) are arranged on a top side (36) of the measuring section (28), wherein an underside (38) of the measuring section (28) has a cavern (40), wherein the cavern (40) is designed in such a manner that the pressure of the fluid medium can be applied to the measuring elements (30), wherein a first covering element (46) is arranged on the top side (36) and covers the measuring elements (30), wherein a second covering element (48) is arranged on the underside (38),
**characterized in that**
the second covering element (48) covers the cavern (40), **in that** the pressure sensor (10) has a housing base (16) on which the sensor housing (12) is arranged, wherein the opening (42) is formed in the housing base (16), and **in that** an adhesive (58) is applied to a side (56) of the measuring section (28) and of the first covering element (46) and of the second covering element (48) facing the housing base (16), wherein the measuring section (28) of the sensor element (26) is adhesively bonded to an edge (44) bounding the opening (42) by means of the adhesive (58).

2. Pressure sensor (10) according to Claim 1, wherein the second covering element (48) has an opening (50) for allowing entry of the fluid medium to the cavern (40) .

3. Pressure sensor (10) according to Claim 1, wherein the first covering element (46) and/or the second covering element (48) is/are a glass plate.

## Revendications

1. Capteur de pression (10) destiné à détecter une pression d'un milieu fluide dans un compartiment de mesure, comprenant un boîtier de capteur (12) muni d'un compartiment électronique (14), au moins un élément capteur (26) disposé dans ou sur le boîtier de capteur (12) de manière à ce qu'il puisse être exposé au milieu pour mesurer une pression du milieu, et un raccord de pression (18) au moyen duquel le capteur de pression (10) peut être monté sur ou dans le compartiment de mesure, dans lequel le raccord de pression (18) comporte un canal d'alimentation (24) pour alimenter en milieu fluide l'élément capteur (26), dans lequel l'élément capteur (26) comporte une section de mesure (28) munie d'éléments de mesure (30) destinés à détecter la pression et disposée dans le canal d'alimentation (24), et une section de contact (32) munie d'éléments de contact (34) destinés à établir un contact électrique avec les éléments de mesure (30) et disposée dans le compartiment électronique (14), dans lequel le capteur de pression (10) comporte une ouverture (42) entre le compartiment électronique (14) et le raccord de pression (18), dans lequel l'élément capteur (26) est disposé de manière à ce que la section de contact (32) fasse saillie à travers l'ouverture (42) et que la section de mesure (28) entoure de manière étanche l'ouverture (42), dans lequel les éléments de mesure (30) sont disposés sur une face supérieure (36) de la section de mesure (28), dans lequel une face inférieure (38) de la section de mesure (28) comprend une cavité (40), dans lequel la cavité (40) est conçue de manière à ce que les éléments de mesure (30) puissent être exposés à la pression du milieu fluide, dans lequel un premier élément de recouvrement (46) recouvrant les éléments de mesure (30) est disposé sur la face supérieure (36), dans lequel un second élément de recouvrement (48) est disposé sur la face inférieure (38),
**caractérisé en ce que** le second élément de recouvrement (48) recouvre la cavité (40), **en ce que** le capteur de pression (10) comporte un socle de boîtier (16) sur lequel est disposé le boîtier de capteur (12), l'ouverture (42) étant réalisée dans le socle de boîtier (16), et **en ce qu'**un adhésif (58) est appliqué sur une face (56) de la section de mesure (28) qui est tournée vers le socle de boîtier (16) et du premier élément de recouvrement (46) et du second élément de recouvrement (48), dans lequel la section de mesure (28) de l'élément capteur (26) est collée par l'adhésif (58) à un bord (44) délimitant l'ouverture (42).

2. Capteur de pression (10) selon la revendication 1, dans lequel le second élément de recouvrement (48) comporte une ouverture (50) destinée à permettre l'introduction du fluide dans la cavité (40).

3. Capteur de pression (10) selon la revendication 1, dans lequel le premier élément de recouvrement (46) et/ou le second élément de recouvrement (48) sont une plaque de verre.
